# EUROPÄISCHE PATENTANMELDUNG

(11) **EP 4 778 835 A1**
(43) Veröffentlichungstag der Anmeldung: **22.07.2026**
(21) Anmeldenummer: 26153054.7
(22) Anmeldetag: 20.01.2026
(51) Int. Cl.: B64D 37/04, B64D 37/30, B64F 5/40

(54) **NACHRÜSTVERFAHREN FÜR EIN KEROSINBETRIEBENES FLUGZEUG**

(30) Priorität: 21.01.2025 DE 102025102091; 25.07.2025 DE 102025129496
(71) Anmelder: Deutsches Zentrum für Luft- und Raumfahrt e. V., 53227 Bonn-Oberkassel (DE)
(72) Erfinder: Atanasov, Georgi, 22547 Hamburg (DE)
(74) Vertreter: VKK Patentanwälte PartG mbB

(57) **Zusammenfassung**

Die Erfindung betrifft ein Verfahren zur Nachrüstung eines Flugzeuges mit kerosinbasiertem Triebwerk aufweisend folgende Schritte:
- Bereitstellen des Flugzeuges in einer Ausgangkonfiguration mit kerosinbasiertem Triebwerk;
- Austauschen oder Erweitern des kerosinbasierten Triebwerks des Flugzeuges, sodass es einen verändertes Triebwerk aufweist, das sowohl mit Kerosin als auch mit einem alternativen Treibstoff angetrieben werden kann;
- Hinzufügen von, insbesondere modular entfernbaren, Außentanks außerhalb eines Flugzeugrumpfes und beabstandet zu diesem, wobei der alternative Treibstoff insbesondere ausschließlich in den Außentanks gespeichert wird.

Die Erfindung betrifft außerdem ein Betriebsverfahren für ein nachgerüstetes Flugzeug sowie ein entsprechendes Flugzeug

## Beschreibung

Die vorliegende Erfindung betrifft ein Nachrüstverfahren für ein kerosinbetriebenes Flugzeug so wie ein Betriebsverfahren für ein entsprechend nachgerüstetes Flugzeug.

Um den Betrieb von Flugzeugen umweltfreundlicher zu gestalten und den Ausstoß von CO₂ zu reduzieren oder gänzlich zu vermeiden, ist eine Vielzahl alternativer Antriebe, die auf alternativen Treibstoffen und Antriebsmethoden abseits der Kerosinverbrennung beruhen, bekannt bzw. Gegenstand aktueller Forschung. Eine vollständige Neuplanung eines Flugzeuges auf Basis dieser alternativen Antriebe ist jedoch zeit- und kostenaufwendig insbesondere im Hinblick auf die notwendige Zertifizierung der Flugzeuge und ist zudem hinsichtlich der Nachhaltigkeit der Produktion nachteilig. Daher ist es bekannt, im Rahmen eines sogenannten Retrofit bestehende Flugzeuge als Ausgangspunkt zu nutzen, umzubauen, ein nachgerüstetes Flugzeug bereitzustellen und so beispielsweise einen verbesserten Antrieb zu nutzen.

Es wurden bereits mehrfach Retrofit Optionen für ursprünglich über Kerosinverbrennung angetriebene Flugzeuge insbesondere hinsichtlich einer Umrüstung auf teilweise oder gänzlichen Wasserstoffbetrieb untersucht. Diese betreffen im Wesentlichen Konfigurationen, bei denen Tanks zur Speicherung von Wasserstoff in den Rumpf des Flugzeuges integriert sind. Allerdings senkt eine derartige Speicherung das Volumen, welches für den Transport von Passagieren oder anderem Transportgut zur Verfügung steht. Zudem wurde eine Variante überprüft, den Wasserstofftank für einen Wasserstoffantrieb auf dem Rumpf eines Flugzeuges oberhalb der Passagierkabine anzuordnen. Dies erfordert jedoch eine komplette Neuauslegung der Rumpfstruktur aufgrund des Gewichts des Wasserstofftankes, womit eine derartige Anordnung ungeeignet für eine Retrofit Lösung ist.

Zudem beschränken derzeit verfügbare alternative Antriebstechniken, insbesondere bezogen auf Speichermethoden und Speichertanks für Wasserstoff, das mögliche Einsatzspektrum für rein wasserstoffbetriebene Flugzeuge.

Es ist daher Aufgabe der Erfindung, eine Nachrüstverfahren für ein Flugzeug vorzuschlagen, welches einen Betrieb des Flugzeuges mit alternativem, nachhaltigen Treibstoff bei einem breiten Einsatzspektrum des nachgerüsteten Flugzeuges ermöglicht und gleichzeitig das Passagierraumvolumen nicht einschränkt.

Eine weitere Aufgabe der Erfindung ist die Angabe eines modularen Betriebsverfahrens für das nachgerüstete Flugzeug.

Ein dritte Aufgabe der Erfindung besteht in der Angabe eines Flugzeuges, welches einen Betrieb des Flugzeuges mit alternativem, nachhaltigen Treibstoff bei einem breiten Einsatzspektrum ermöglicht und gleichzeitig das Passagierraumvolumen nicht einschränkt.

Als alternativen Treibstoff versteht die Erfindung derartige Energieträger zur Versorgung eines alternativen Antriebs eines Flugzeuges, die sich von mineralölbasierten, fossilen Brennstoffen wie dem typischerweise verwendeten Kerosin unterscheiden und einen verringerten Schadstoffausstoß des sie verwendenden alternativen Antriebs zu Folge haben. Insbesondere sind darunter Wasserstoff (flüssig oder gasförmig), Methan (z.B. in Form von LNG, Bio-LNG, SNG, usw.) und elektrischer Strom, der beispielsweise in Form von Akkus bereitgestellt wird, zu verstehen.

Erfindungsgemäß wird die genannte Aufgabe gelöst durch ein Verfahren zur Nachrüstung eines Flugzeuges gemäß Anspruch 1. Dabei wird von einem Flugzeug mit kerosinbasiertem Triebwerk als Ausgangspunkt für das erfindungsgemäße Verfahren ausgegangen. Es handelt sich um ein so-genanntes Retrofit dieses Flugzeuges, womit das erfindungsgemäße Verfahren resourcenschonend eine komplette Neukonstruktion vermeidet. Das nachzurüstende Flugzeug wird in einer Ausgangskonfiguration bereitgestellt. Ein geeignetes Flugzeug für eine erfindungsgemäße Nachrüstung ist beispielsweise der Airbus A320. Anschließend wird das kerosinbasierte Triebwerk entweder komplett ausgetauscht gegen ein verändertes Triebwerk, welches sowohl mit Kerosin als auch mit einem alternativen Treibstoff bzw. alternativem Energieträger betrieben werden kann oder auch mit beiden gleichzeitig. Oder aber, das kerosinbasierte Triebwerk wird erweitert, insbesondere um ein Antriebselement erweitert, welches mit alternativem Treibstoff betreibbar ist.

Zudem werden gemäß einem weiteren Schritt des erfindungsgemäßen Verfahrens Außentanks außerhalb eines Flugzeugrumpfes und insbesondere beabstandet zu diesem angeordnet, sodass der Flugzeugrumpf nicht das Gewicht der Außentanks tragen muss.

Im Außentank wird der alternative Treibstoff zur Versorgung des veränderten Triebwerks gespeichert, insbesondere ist vorgesehen, dass der alternative Treibstoff ausschließlich in den Außentanks gespeichert wird. Damit ist das Innenvolumen des Flugzeugrumpfes nicht durch zusätzliches Tankvolumen zur Speicherung des alternativen Treibstoffs belegt und das Passagierraumvolumen ist im Vergleich zur Ausgangskonfiguration nicht beschränkt.

Die veränderten Triebwerke sind vorzugsweise mittels Pylonen in dem Fachmann bekannter Weise mit den Flügeln des nachgerüsteten Flugzeuges verbunden, insbesondere entsprechend einer Verbindung der ursprünglichen Triebwerke. Dabei weisen die Pylonen der veränderten Triebwerke Systemschnittstellen auf, die eine Verbindung von Treibstoffleitungen zur Weiterleitung von alternativem Treibstoff, der in den Außentanks gespeichert wird, mit Triebwerkstreibstoffleitungen ermöglicht. Entsprechende Schnittstellen sind auch an Anbindungen der Außentanks vorzusehen. Diese müssen eine Verbindung der Treibstoffleitungen mit dem Flugzeug ermöglichen und die Verbindung von Signal und Sensorkabeln.

Das veränderte Triebwerk muss dabei der aerodynamischen Charakteristik der zugefügten Außentanks Rechnung tragen und für eine entsprechend erhöhte Leistung ausgelegt werden.

Vorzugsweise sind die Schnittstellen der Außentanks so konfiguriert, dass die Außentanks ohne großen Aufwand, beispielsweise über Nacht, entfernt werden können und das nachgerüstete Flugzeug auch mit entfernten Außentanks weiter mit Kerosin betreibbar ist.

Die Möglichkeit mit einem erfindungsgemäß nachgerüsteten Flugzeug sowohl alternativen Treibstoff als auch Kerosin als Energielieferant verwenden zu können, erhöht das Einsatzspektrum des Flugzeuges deutlich im Vergleich zu ausschließlich auf alternativen Treibstoffen basierenden Flugzeugen. So ist es nicht notwendig, dass die in den Außentanks gespeicherte Menge alternativen Treibstoffs für eine Auslegungsreichweite des Flugzeuges ausgelegt sein muss, die ohnehin selten geflogen wird. Vorteilhaft werden die Außentanks lediglich derart ausgelegt, dass das nachgerüstete Flugzeug häufig geflogene Flugstreckenlängen, die einem Bruchteil, beispielsweise der Hälfte, einem Viertel oder einem Achtel, der Auslegungsreichweite entsprechen, ausschließlich mit dem alternativen Treibstoff bedienen kann. Damit können die Außentanks kleiner dimensioniert werden, was deren aerodynamische Charakteristik deutlich verbessert und wodurch ihr Gewicht (sowohl das Leergewicht als insbesondere auch das mit alternativem Treibstoff gefüllte Gewicht) reduziert wird, welches sich je nach Anordnung negativ auf die aeroelastischen Eigenschaften der Flügel auswirken kann, weshalb eine Gewichtsreduzierung bevorzugt ist. Für selten bediente längere Flüge, bis zu einer Größenordnung der Auslegungsreichweite des Flugzeuges, kann vorteilhaft Kerosin benutzt werden, welches in ohnehin vorhandenen Kerosintanks, den Haupttanks des Flugzeuges, welche im Rumpf und/oder den Flügeln angeordnet sind, bei entsprechenden Flügen mitgeführt werden kann. So kann ein Flugzeug in einer Ausgangskonfiguration beispielsweise für eine Flugstrecke von 3000 nmi bei Standard-Nutzlast ausgelegt sein. Typischerweise wird ein solches Flugzeug durchschnittlich auf Flugstrecken zwischen 600 und 900 nmi eingesetzt. Um einen Großteil der Flüge, bei denen das nachgerüstete Flugzeug eingesetzt wird mit alternativem Treibstoff fliegen zu können, ist es also ausreichend, die Außentanks insgesamt auf eine Reichweite von 1000 nmi auszulegen. Sollte eine größere Flugstrecke bedient werden, so ist die entsprechende Menge Kerosin im Haupttank mitzuführen und das nachgerüstete Flugzeug wird für die entsprechende Streckendifferenz mit Kerosin betrieben. Auch ist es möglich, Kerosin lediglich als Reserve mitzuführen, was die mit rein alternativem Treibstoff bedienbare Reichweite erhöht, da eine Reserve zwar zwangsläufig mitgeführt werden muss, um einem eventuellen Warten in der Luft am Flughafen, ungünstigeren Luftbedingungen oder ungeplant notwendigen Streckenverlängerungen zu begegnen, diese jedoch in Form von Kerosin mitgeführt werden kann, um das Volumen der Außentanks trotz möglichst hoher Reichweite zu begrenzen, insbesondere aufgrund der aerodynamischen Charakteristik und der insbesondere durch die Flügel zu tragenden Last der gefüllten Außentanks.

In einer bevorzugten Weiterbildung der Erfindung bleibt die maximale Startmasse des Flugzeuges (MTOW) durch das erfindungsgemäße Verfahren erhalten. Dies erleichtert eine Zertifizierung des nachgerüsteten Flugzeuges deutlich. Die maximale Startmasse des nachgerüsteten ist damit gleich der maximalen Startmasse des Flugzeuges in der Ausgangskonfiguration. Die maximale Startmasse eines Flugzeuges setzt sich zusammen aus der Leermasse der Flugzeugzelle, der Masse der transportierten Nutzlast und der Masse des mitgeführten Treibstoffs. Die Leermasse der nachgerüsteten Flugzeugzelle ist aufgrund der Außentanks und der zugehörigen Anbindungen und Verstärkungen der Flügel erhöht. Um die maximale Startmasse zu erhalten, muss die Summe der der zu transportierenden Nutzlastmasse und der Treibstoffmasse um diese Erhöhung reduziert werden. Dies bedeutet bei vereinfachter Annahme gleicher Energiedichte, bezogen auf die Summe der Masse aus Treibstoff und Außentank, von alternativem Treibstoff und Kerosin eine Einschränkung des Betriebsspektrums in Form der Nutzlast-Reichweitenabhängigen Einsetzbarkeit des nachgerüsteten Flugzeuges. Da ein Großteil der von Flugzeugen geflogenen Flugstrecken jedoch deutlich unterhalb der Auslegungsreichweite des jeweiligen Flugzeuges liegen und demnach eine deutlich geringere Treibstoffmasse mitgeführt werden muss, ist ein Großteil der für das Flugzeug in der Ausgangskonfiguration vorgesehenen Flüge auch mit dem nachgerüsteten Flugzeug, bei gleicher MTOW bedienbar, insbesondere mit alternativem Treibstoff.

Weiterhin sollte beachtet werden, dass bei Verwendung von alternativen Treibstoffen die eine höhere Energiedichte als Kerosin besitzen, eine Verringerung der mitführbaren Treibstoffmasse nicht zwangsläufig eine Einschränkung der Reichweite des Flugzeuges verglichen mit der Ausgangskonfiguration bedeutet: So hat beispielsweise Wasserstoff eine dreimal höhere Energiedichte als Kerosin. Bei ausreichend leichter Konstruktion der Außentanks und deren Anbindungen, also bei ausreichend geringer Vergrößerung der Leermasse der Flugzeugzelle des nachgerüsteten Flugzeuges verglichen mit der Massendifferenz der jeweiligen Treibstoffe, kann die erzielbare Reichweite sogar erhöht werden. Anders gesagt, kann, bei Annahme gleicher Nutzlastmassen, die Leermassendifferenz durch die Treibstoffmassendifferenz bei Annahme einer typsicherweise jedenfalls mitgeführten Kerosinmenge des Flugzeuges in der Ausgangskonfiguration, durch die höhere Energiedichte des alternativen Treibstoffs ausgeglichen werden und die Reichweite des nachgerüsteten Flugzeuges ist höher als die des Flugzeuges in der Ausgangskonfiguration.

Beispielsweise entsprechen 10000 kg mitgeführtes Kerosin bei gleicher Energiemenge des jeweiligen Treibstoffs einer Menge von ca. 3600 kg Wasserstoff. Wird nun von dem Flugzeug in der Ausgangskonfiguration mehr Kerosin mitgeführt, bzw. liegt das Äquivalent der für eine Auslegungsreichweite des Flugzeuges in der Ausgangskonfiguration notwendigen Kerosinmasse oberhalb von 10000 kg und liegt die Erhöhung der Leermasse der Flugzeugzelle unterhalb der Treibstoffmassendifferenz, bei dem genannten Beispiel unter 6400 kg (beispielsweise 5000 kg), so muss das im nachgerüsteten Flugzeug zusätzlich zum Wasserstoff mitführbare Kerosin um weniger als die verglichene Kerosinmasse, hier 10000 kg, reduziert werden - bei Annahme der vorliegenden Massen lediglich um 8600 kg. Damit kann erkenntlich insgesamt eine in Bezug auf das Energieäquivalent höhere Menge Treibstoff (hier 1400 kg Kerosin) mitgeführt werden und die Reichweite des nachgerüsteten Flugzeuges steigt sogar.

Gesagtes gilt unter der vereinfachten Annahme einer Vernachlässigung der aerodynamischen Charakteristik der Außentanks und deren Anbindungen. Diese können durch widerstandssenkende Maßnahmen an den Außentanks verbessert werden.

Zudem ist es möglich, dass bei einem Ersetzen der Triebwerke des Flugzeuges in der Ausgangskonfiguration durch ein moderneres, effizienteres Triebwerk sogar Leermasse der Flugzeugzelle eingespart wird bzw. sich die Reichweite aufgrund einer höheren Effizienz des geänderten Triebwerkes erhöht.

Bevorzugt werden zwei Außentanks hinzugefügt, wobei diese symmetrisch zum Flugzeugrumpf angeordnet werden. Grundsätzlich ist aber auch eine andere Anzahl bei symmetrischer Anordnung möglich.

In Ausgestaltung des erfindungsgemäßen Verfahrens ist es vorgesehen, dass das kerosinbasierte Triebwerk des Flugzeuges in der Ausgangskonfiguration eine Kerosin-Gasturbine ist und/oder, dass das veränderte Triebwerk als Dual-Fuel Triebwerk ausgebildet ist.

Damit sind marktübliche, kerosinbasierte Flugzeuge als Ausgangspunkt für das erfindungsgemäße Verfahren verwendbar und entsprechend nachrüstbar. Die veränderten Triebwerke in Form von Dual- Fuel-Triebwerken ermöglichen die insbesondere gleichzeitige Nutzung verschiedener Energieträger, also Kerosin und eines alternativen Treibstoffs. Dies verbessert den Schadstoffausstoß des Flugzeuges und erhöht dessen Flexibilität, sodass es nicht ausschließlich auf das Vorhandensein eines alternativen Treibstoffes an einem jeweiligen Flughafen angewiesen ist.

In Weiterbildung des erfindungsgemäßen Verfahrens ist vorgesehen, dass das veränderte Triebwerk eine Kerosin-Gasturbine und ein alternatives Antriebsmittel, insbesondere eine Brennstoffzelle aufweist oder durch diese beiden gebildet ist.

Derart ist das ursprüngliche Triebwerk in der Ausgangskonfiguration einfach erweiterbar. Das zusätzliche alternative Antriebsmittel ermöglicht zudem einen erhöhten Leistungsoutput, bei gleichzeitigem Betrieb von Kerosin-Gasturbine und alternativem Antriebsmittel. Die Effizienz der Kerosinverbrennung ist bei Nutzung der Kerosin-Gasturbine nicht durch einen Kompromiss wie bei Nutzung einer für Kerosin und einen weiteren alternativen Treibstoff nutzbaren Dual-Fuel Gasturbine reduziert. Einschränkend ist hierbei anzumerken, dass ein derartiges Triebwerk einen Betrieb ausschließlich mit alternativem Kraftstoff nicht ermöglicht. Diese Lösung eignet sich nur für geringe Hybridisierungsraten, also gleichzeitiger Nutzung von Kerosin und geringen Mengen an alternativem Treibstoff, da das veränderte Triebwerk nicht zu groß gebaut werden sollte, damit die Gesamtmasse des nachgerüsteten Flugzeuges möglichst die MTOW des Flugzeuges in der Ausgangskonfiguration nicht überschreitet.

Weiterhin ist in Ausgestaltung der Erfindung vorgesehen, dass das veränderte Triebwerk eine Dual-Fuel Gasturbine aufweist oder durch diese gebildet ist. Derart ist kein weiteres Antriebsmittel notwendig, um einen Dual-Fuel-Antrieb zu ermöglichen und das Gewicht und Konstruktionsaufwand des geänderten Triebwerks ist reduziert. Prinzipiell ist diesbezüglich von der Erfindung auch die Möglichkeit eingeschlossen, dass die Kerosin-Gasturbine des Flugzeuges in der Ausgangsposition im Schritt der Triebwerkserweiterung bzw. des Triebwerksaustauschs derart umgebaut wird, dass sie für eine Dual-Fuel-Nutzung geeignet ist.

Das erfindungsgemäße Verfahren sieht zudem in einer Weiterbildung vor, dass der alternative Treibstoff Wasserstoff, insbesondere Flüssigwasserstoff, oder LNG (bzw. SNG) ist. Somit sind typische alternative Treibstoffe nutzbar, deren Antriebstechnologie und Speichermöglichkeiten bereits weit erforscht sind.

In Ausgestaltung des erfindungsgemäßen Verfahrens ist vorgesehen, dass die Außentanks mittels Pylonen befestigt werden. Die Anbindung einer Komponente am Flugzeugflügel mittels Pylonen ist dem Fachmann bereits aus der Anbindung der Triebwerke bekannt. Die Pylonen, die die Außentanks mit den Flügeln verbinden, weisen zudem bevorzugt Schnittstellen auf, diese ermöglichen eine Verbindung der Treibstoffleitungen des alternativen Treibstoffs mit dem Flugzeug.

Das erfindungsgemäße Verfahren sieht in einer Weiterbildung vor, dass die Außentanks an Flügeln des Flugzeuges angeordnet werden, insbesondere oberhalb oder unterhalb der Flügel, insbesondere wobei eine Struktur der Flügel modifiziert wird, um ein Gewicht der Außentanks und deren aerodynamische, strukturmechanische und aeroelastische Lasten tragen zu können und eine mechanische Anbindung mit den Flügeln zu ermöglichen.

Eine Anordnung der Außentanks an den Flügeln ermöglicht deren Anbindung, ohne dass eine Struktur des Flugzeugrumpfes angepasst werden müsste. Zudem birgt eine Lagerung des alternativen Treibstoffs beispielsweise im Fall von Wasserstoff unter Umständen gewisse Risiken, so hat die Lagerung von gasförmigem Wasserstoff bei sehr hohem Druck zu erfolgen bzw. die Lagerung von Flüssigwasserstoff bei extrem niedrigen Temperaturen im Außentank. Daher ist es vorteilhaft, wenn der Außentank am Flügel und damit nicht in unmittelbarer Nähe des Flugzeugrumpfes angeordnet ist. Es ist bevorzugt, dass die Integration mittels Pylonen-Anbindung erfolgt. Die Integration am Flügel muss ebenso konsistent mit der Triebwerksanordnung gewählt werden. Es ist bevorzugt, dass die Außentanks in der gleichen Breitenposition des Flügels wie die Triebwerke integriert werden. Wenn die Triebwerke unterhalb des Flügels angebracht sind, müssen in dem Fall die Außentanks über den Flügel integriert werden. Somit ist die Pylonen-Anbindungsstelle sehr nah an den Triebwerken, wodurch die notwendigen Kraftstoffleitungen und dazugehörigen Systemenschnittstellen kurz gehalten werden können. Alternativ können die Triebwerke in einer Flügelbreite-Position außerhalb der Flügelbreite-Position der Triebwerke integriert sein. Dadurch können die Außentanks unterhalb des Flügels integriert werden, auch wenn die Triebwerke unterhalb des Flügels angebracht sind.

In Ausgestaltung des Verfahrens ist es vorgesehen, dass die Außenstanks mit Stützstreben am Flugzeugrumpf abgestützt werden. Dies ermöglich eine vom Flügel weiter entferntere Platzierung der Außentanks und deren Stabilisierung.

In einer möglichen Ausführungsform der Erfindung ist mindestens ein, vorteilhaft zwei Außentanks, welche symmetrisch zum Flugzeugrumpf angeordnet sind, über Pylonen mit dem Rumpf verbunden.

In einer weiteren möglichen Ausführungsform der Erfindung sind die Außentanks derart, insbesondere über Pylonen, mit den Flugzeugflügeln verbunden, dass mit ihrer Hilfe eine strukturelle Verbindung zwischen Flügel und Höhenleitwerk hergestellt wird. Diese Ausführungsform entspricht einer Tail-Boom-Konfiguration.

Weiterhin ist in Ausgestaltung des erfindungsgemäßen Verfahrens vorgesehen, dass die Außentanks Mittel zur Erzeugung von laminarer Strömung und/oder schuberzeugende Antriebsmittel aufweisen.

Genannte Mittel erzeugen eine Reduzierung des durch eine zusätzliche benetzte Oberfläche der Außentanks begründeten erhöhten Treibstoffverbrauchs bei Nutzung des Außentanks an einem Flugzeug. Die Mittel zur Erzeugung laminarer Strömung bewirken diese Reduzierung durch eine Reduzierung des Widerstandes infolge der Luftreibung der entsprechenden Oberfläche, der insbesondere infolge der Ausbildung turbulenter Strömungen am umströmten Außentank entsteht. Dies erfolgt durch eine Vergrößerung derjenigen Oberfläche, über die hinweg eine Oberflächenströmung laminar ist bzw. durch die Verschiebung eines Umschlagpunktes, hinter dem die Strömung als nicht-laminar, bzw. turbulent zu betrachten ist.

Die schuberzeugenden Antriebsmittel hingegen unterstützen zunächst einen Hauptantrieb, der die eigentliche Antriebsleistung des nachgerüsteten Flugzeuges erzeugt und der das veränderte Triebwerk enthält. Damit ist der Treibstoffbedarf des Hauptantriebs reduziert. Zudem muss am Hauptantrieb keine durch ein Hinzufügen der Außentanks induzierte zusätzliche Antriebslast aufgebracht werden.

Die Erfindung sieht außerdem gemäß einer möglichen Weiterbildung vor, dass die Mittel zur Erzeugung laminarer Strömung eine mikroperforierte Oberfläche aufweisen, weiter insbesondere als HLFC System ausgebildet sind, wobei das HLFC System insbesondere ein autonomes Leitungserzeugungssystem umfasst wodurch es insbesondere unter Nutzung des im Außentank gespeicherten alternativen Treibstoffs angetrieben werden kann. Ein solches Leistungserzugungssystem kann beispielsweise als Brennstoffzellensystem ausgestaltet sein.

Die mikroperforierte Oberfläche kann dabei im Rahmen Öffnungen, insbesondere kleiner als 1mm, bevorzugt kleiner als 100 µm aufweisen. Durch diese ist eine direkte Beeinflussung der an die entsprechende Oberfläche angrenzenden Strömung ermöglicht. Ein HLFC (Hybrid Laminar Flow Control) System ist dabei eine besonders effektive Möglichkeit, die Lauflänge der laminaren Strömung über die angeströmte Oberfläche des Außentanks zu verlängern.

Es kann dabei insbesondere vorgesehen sein, dass der Tank eine mehrlagige Außenhaut mit Mikroöffnungen aufweist. Unterhalb der Außenhaut ist insbesondere ein Kammersystem vorgesehen, welches mit einem Absaugsystem, insbesondere einem Kompressor verbunden ist. Dadurch ist ein anteiliges Absaugen der an die perforierte Oberfläche anströmenden Luft ermöglicht, gemäß dem einem Fachmann bekannten HLFC Konzept. Es ist dabei in Ausgestaltung der Erfindung vorgesehen, lediglich einen im Betriebszustand des Außentanks angeströmten, in einer Flugrichtung vorderen Bereich einer äußeren Oberfläche des Außentanks mit einer genannten Außenhaut zu versehen, insbesondere weniger als ein Drittel der Oberfläche des Außentanks bevorzugt weniger als ein Viertel der Oberfläche der Außenhaut. Hinsichtlich der hohen Anforderungen an das Material der perforierten Außenhaut und an das darunter liegende Kammersystem sowie hinsichtlich Leistung und Dimensionierung des Absaugsystems stellt dieser Anteil einen Kompromiss zwischen genannten Anforderungen, Kosten und erreichter Erhöhung der laminaren Strömungsoberfläche dar.

Das HLFC System kann weiterhin einen Leistungserzeuger für elektrische Leistung umfassen. Dieser kann auf einer Brennstoffzelle basieren, welche durch Nutzung des im Außentank gespeicherten alternativen Treibstoffs versorgbar sein kann. Derart wird das Absaugsystem des HLFC Systems, insbesondere der Kompressor vorteilhaft mit Leistung versorgt, ohne dass der Hauptantrieb die zusätzliche Leistung liefern muss. Der Hauptantrieb muss daher für diesen Fall nicht überdimensioniert werden.

Weiterhin, kann der Außentank Antriebsmittel umfassen, welches aus einem Propeller oder ummantelten Fan bestehen. Diese können durch ein insbesondere mit alternativem Treibstoff aus dem Außentank betriebenes Leistungserzeugungssystem, welches insbesondere auf Brenstoffzellen basiert ist, autonom angetrieben werden. Derart ist der Antrieb des Außentanks unabhängig vom Versorgungssystems des Hauptantriebs des nachgerüsteten Flugzeugs und dessen Haupttank betreibbar. Damit ist der zusätzliche Antrieb des Außentanks unabhängig vom Hauptantrieb und der Außentank grundsätzlich als modulares Bauteil konfigurierbar. Zudem wird der Hauptantrieb durch die Antriebsmittel des Außentanks nicht zusätzlich belastet, sodass der Hauptantrieb nicht für ein eventuelles Mitführen des Außentanks überdimensioniert werden muss. Dies kann insbesondere beim Start des Flugzeugs von Vorteil sein.

Außerdem ist in Ausgestaltung des erfindungsgemäßen Verfahren noch vorgesehen, dass die Antriebsmittel zur Aufnahme von Luft aus einer den Außentank umgebenen Grenzschicht ausgelegt sind und/oder wobei die Antriebsmittel Absaugmittel zum Absaugen der Luft aus der Grenzschicht enthalten.

Es ist damit vorgesehen, dass die Antriebsmittel dazu ausgelegt sind, im Betriebszustand Luft aus einer den Außentank umgebenden Grenzschicht aufzunehmen. Diese Luft ist gemäß einer vorteilhaften Ausführungsform auch für den Antrieb nutzbar. Außerdem kann in einer Ausführungsform der Erfindung die Grenzschicht-Luft zusätzlich mit Umgebungsluft verwendet werden. Auch kann die Grenzschichtluft für eine Antriebseffizienzerhöhung verwendet werden. Dies ist vorteilhaft, wenn kein HLFC System zur Verfügung steht. Die den Tank umgebende Grenzschicht bezeichnet, zumindest während eines Reisefluges, die Luft, die sich mit dem Bezugssystem des Flugzeugs, bzw. dessen Oberfläche, bewegt und damit im Vergleich zur umgebenden Luft eine Relativgeschwindigkeit aufweist. Die Relativgeschwindigkeit nimmt mit größer werdendem Abstand zum Flugzeug, bzw. zu dessen jeweiliger Oberfläche ab.

Die Aufnahme von Luft der Grenzschicht in der Luftströmung eines Propellers oder eines ummantelten Propellers, bzw. die Positionierung des Antriebs, insbesondere Propellers, innerhalb der Grenzschicht, ist ein als Boundary Layer Ingestion (BLI) grundsätzlich bekanntes Konzept zur Verbesserung der Antriebseffizienz von Flugzeugen. Die zur impulsarme Luft der Grenzschicht wird für den weiteren Antrieb des Flugzeuges verwendet und durch den Propeller weiter beschleunigt. Dadurch wird die Antriebseffizienz im Vergleich zur Nutzung Impulsfreier Luft verbessert.

Durch Aufnahme der Luft aus der Grenzschicht sind die Antriebsmittel des gemäß dem erfindungsgemäßen Verfahren dem nachzurüstenden Flugzeug hinzuzufügenden Außentanks den Impuls der Grenzschichtströmung nutzend und eine Antriebseffizienz verbessernd. Auf diese Weise ist es ermöglicht, den zusätzlichen Treibstoffbedarf, der durch das Hinzufügen eines erfindungsgemäßen Außentanks entsteht, zu reduzieren.

Bei gleichzeitigem Vorhandensein von Mitteln zur Erzeugung laminarer Strömung, insbesondere eines HLFC Systems, ist die gegenseitige Beeinflussung beider Systeme zu beachten. Dabei ist es grundsätzlich vorteilhaft, wenn die in den Antriebsmitteln angenommene Luftströmung möglichst laminar ist, beispielweise in Folge der Laminierung durch das HLFC System, weil eine laminare Strömung viel gleichmäßiger ist und dadurch deutlich weniger Vibrationen in einem Antriebsmittel verursacht. Zusätzlich kann die vom HLFC System eingesaugte Luft ebenso für Antriebserzeugung verwendet werden.

Weiterhin ist es gemäß einer Ausführungsform des für des erfindungsgemäßen Verfahrens vorgesehen, dass die Antriebsmittel der hinzuzufügenden Außentanks Absaugmittel zum Absaugen der Luft aus der Grenzschicht enthalten. Derart können die Antriebsmittel selber bei geeigneter Anordnung und Ausformung als Absaugmittel wirken, indem sie Luft ansaugen. Dabei weisen die Absaugmittel ein verteiltes oder ein zentrales System von Absauglöchern oder Spalten auf. Ein Goldschmied Propulsor wäre eine beispielshafte Ausführungsform dieses Konzepts. Die den Antriebsmitteln zugeführte, abgesaugte Grenzschichtluft wird anschließend Schub erzeugend ausgestoßen. Das Absaugen insbesondere turbulenter Grenzschichtluft verringert die negativen, widerstandinduzierenden Auswirkungen der turbulenten Strömung an der Außenfläche des Außentanks. Zusätzlich wird ein im Vergleich zur ruhenden Luft vorhandener Restimpuls der Grenzschichtluft für den Antrieb ausgenutzt. Derart wird einerseits die Antriebseffizienz erhöht und der Widerstand des Außentanks verringert. Das verringert wiederum den durch das Zufügen des Außentanks nötigen zusätzlichen Treibstoffbedarf. Auch bei der beschriebenen vorteilhaften Verwendung eines Goldschmied Propulsors bzw. eines diesem ähnelnden Systems als Antriebsmittel des erfindungsgemäß hinzuzufügenden Außentanks ist bei gleichzeitiger Verwendung von Mitteln zur Strömungslaminierung, insbesondere eines HLFC Systems, die Wechselwirkung beider Systeme zu beachten und der Fachmann wird eine geeignete Anordnung und Dimensionierung der Systeme nach entsprechender Simulation und Testung zu wählen wissen. Besonders vorteilhaft wird der im Außentank gespeicherte Treibstoff in dieser Ausführungsform auch zur Energieversorgung des Absaugsystems eines grenzschichtansaugenden Antriebssystems genutzt.

Ein weiterer Vorteil der erfindungsgemäßen Verwendung eines Goldschmied Propulsor ähnlichen Systems ist, dass man potentiell die Einschnürung der Gondel aggressiver gestalten kann. Die Absaugung wird dann im Rahmen des Betriebs eines mittels des erfindungsgemäßen Verfahrens nachgerüsteten Flugzeuges dafür genutzt, eine Strömungsablösung wegen der aggressiveren Einschnürung zu vermeiden.

Die zweite Aufgabe der Erfindung wird gelöst durch ein Betriebsverfahren für ein gemäß einem der Ansprüche 1 bis 12 nachgerüstetes Flugzeug, wobei das nachgerüstete Flugzeug entweder in einer Basiskonfiguration, bei der die Außentanks abgebaut sind, mit Kerosin betrieben wird oder in einer erweiterten Konfiguration, mit angebauten Außentanks, mit Kerosin, alternativem Treibstoff oder einer Kombination aus beidem betrieben wird.

In der Basiskonfiguration ist das nachgerüstete Flugzeug weitestgehend ähnlich dem Flugzeug in der Ausgangskonfiguration, insbesondere hinsichtlich der Leermasse der Flugzeugzelle. Eine etwaige Reichweitenverschlechterung bzw. ein leicht erhöhter Verbrauch ergibt sich unter Umständen aufgrund der leicht verschlechterten Effizienz des Dual-Fuel Triebwerks im reinen Kerosinbetrieb im Vergleich zur Kerosin-Gasturbine des Flugzeuges in der Ausgangskonfiguration. Dafür ermöglicht das Betriebsverfahren jedoch zusätzlich den Betrieb des nachgerüsteten Flugzeugs in der erweiterten Konfiguration mit insbesondre ausschließlicher Nutzung eines alternativen Treibstoffs. Es wird somit, je nach verwendetem verändertem Triebwerk, unter Umständen eine Verschlechterung der Antriebseffizienz in Kauf genommen, um eine Variabilität in der Nutzung verschiedener Treibstoffe und insbesondere alternativer Treibstoffe zu erhalten sowie eine breite Variabilität der Einsetzbarkeit des nachgerüsteten Flugzeuges auf verschiedenen Flugstreckenlängen. Zudem wird die Möglichkeit eröffnet, das nachgerüstete Flugzeug auch bei nicht vorhandenen Tankmöglichkeiten für alternativen Treibstoff an einem Flughafen effizient, also ohne leer mitzuführende Außentanks, nutzen zu können. In einem solchen Fall können die Außentanks vom nachgerüsteten Flugzeug abgebaut werden und das Flugzeug mit Kerosin betankt in der Basiskonfiguration geflogen werden.

In Weiterbildung des erfindungsgemäßen Betriebsverfahrens ist vorgesehen, dass das nachgerüstete Flugzeug in der erweiterten Konfiguration zumindest in einigen Flugphasen oder während des gesamten Fluges ausschließlich mit Kerosin, ausschließlich mit alternativem Treibstoff oder gleichzeitig mit Kerosin und alternativem Treibstoff angetrieben wird.

Derart ist die Nutzung des nachgerüsteten Flugzeuges vorteilhaft sehr variabel möglich. Es wird bevorzugt ausschließlich auf einen Antrieb mittels alternativem Treibstoff zurückgegriffen, um ein höchstmöglich schadstoffreduzierten Flug zu ermöglichen. Zur Verbesserung der Effizienz des nachgerüsteten Triebwerkes bzw. zur Verstärkung dessen Antriebsleistung, insbesondere wenn dieses eine Kerosingasturbine und ein alternatives Antriebsmittel aufweist, kann eine gleichzeitige Verwendung von Kerosin und alternativem Treibstoff, beispielsweise Wasserstoff oder LNG, vorteilhaft sein. Eine ausschließliche Nutzung von Kerosin kann insbesondere dann erfolgen, wenn der alternative Treibstoff verbraucht ist und das Flugziel noch nicht erreicht ist. Dabei kann es sich um eine geplant längere Flugstrecke als die Reichweite mit reiner Nutzung des alternativen Triebstoffs handeln oder um unvorhergesehene Flugverlängerungen/Flugveränderungen, die eine Nutzung von Kerosin als Reserve notwendig machen. Ein Mischbetrieb beider Treibstoffe kann zudem beispielsweise vorteilhaft sein, um nicht allen alternativen Treibstoff in den Außentanks zu verbrauchen, um beispielsweise noch die Antriebsmittel oder schuberzeugende Mittel der Außentanks versorgen zu können.

Beim Betrieb gemäß dem erfindungsgemäßen Verfahren nachgerüsteter Flugzeuge ist zu beachten, dass sich, selbst bei gleicher maximaler Startmasse MTOW des nachgerüsteten Flugzeuges in der Basiskonfiguration B0 und in der erweiterten Konfiguration B1 die leere Masse des Flugzeuges OEW in den verschiedenen Konfiguration aufgrund der modular vorhandenen Außentanks und Anbindungen/Pylonen unterscheidet. Dies kann die Zertifizierung des Flugzeuges erschweren. Für die Zertifizierung des Flugzeuges sind weiterhin die Parameter MZFW (maximal zero-fuel weigth) und MLW (maximal landing weigth) maßgeblich. Dabei ist MZFW die Summe aus OEW und der maximalen Nutzlast. Eine Gleichheit von MZFW und möglichst von MLW in der Basiskonfiguration und in der erweiterten Konfiguration des nachgerüsteten Flugzeuges können durch eine Reduzierung der maximal zugelassenen Nutzlast der erweiterten Konfiguration erreicht werden. Derart ist eine Zertifizierung des nachgerüsteten Flugzeuges zum Betrieb in beiden Versionen erleichterbar. Weiterhin ist zu beachten, dass, falls MLW steigt, die Anfluggeschwindigkeit des Flugzeuges steigt, was bei manchen Anwendungen kritisch sein kann, auch wenn letztere durch eine verbesserte Hochauftriebsleistung selbst bei höherem MLW auf dem Niveau der Basisversion konstant gehalten werden kann. Dies erhöht jedoch den Aufwand des Nachrüstverfahrens. Daher ist es bevorzugt, die maximale Nutzlast entsprechend dem zusätzlichen Gewicht der Außentanks und der Anbindungen/Verstrebungen zu reduzieren, um LLW (und MZFW) bei Basiskonfiguration und erweiterter Konfiguration gleich zu halten.

Die Dritte Aufgabe der Erfindung wird gelöst durch ein Flugzeug gemäß Anspruch 15. Ein derartiges Flugzeug weist ein Dual-Fuel Triebwerk für einen Betrieb mit Kerosin und alternativem Treibstoff sowie modular entfernbare Außentanks, in denen der alternative Treibstoff gespeichert wird auf. Damit ist das erfindungsgemäße Flugzeug sowohl in einer Basiskonfiguration, ohne angebaute Außentanks und in einer erweiterten Konfiguration mit angebauten Außentanks nutzbar, gleich einem gemäß dem erfindungsgemäßen Verfahren nach Ansprüchen 1 - 12 nachgerüsteten Flugzeug. Derart ist vorteilhaft auf einer Vielzahl bedienbarer Strecken alternativer Treibstoff als Antriebsmittel nutzbar. Gleichzeitig ermöglicht das Dual-Fuel Triebwerk einen klassischen Kerosinantrieb, sodass auch weitere Strecken bedient werden können, mit reinem Kerosinbetrieb, wobei Kerosin in einem entsprechenden Haupttank in den Flügeln und/oder im Rumpf des Flugzeuges mitgeführt wird. Ein Mischbetrieb mit gleichzeitiger Nutzung von alternativem Treibstoff und Kerosin ist ebenfalls möglich. Ein derartiges Flugzeug kann durch ein Retrofit-Verfahren aus einem Flugzeug mit ausschließlich kerosinbasiertem Triebwerk in der Ausgangskonfiguration hergestellt werden. Erfindungsgemäß ist jedoch ebenfalls ein entsprechender Neubau, der von vorneherein entsprechende Dual-Fuel Triebwerke vorsieht sowie Anbindungen für Außentanks und eventuell für deren Transport notwendige Verstärkungen der Flügel.

Das erfindungsgemäße Flugzeug kann sowohl mit Außentanks mit Mitteln zur Erzeugung laminarer Strömung und/oder schuberzeugenden Antriebsmitteln ausgerüstet sein als auch mit Außentanks, die weder Mittel zur Erzeugung laminarer Strömung noch schuberzeugende Antriebsmittel aufweisen.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:

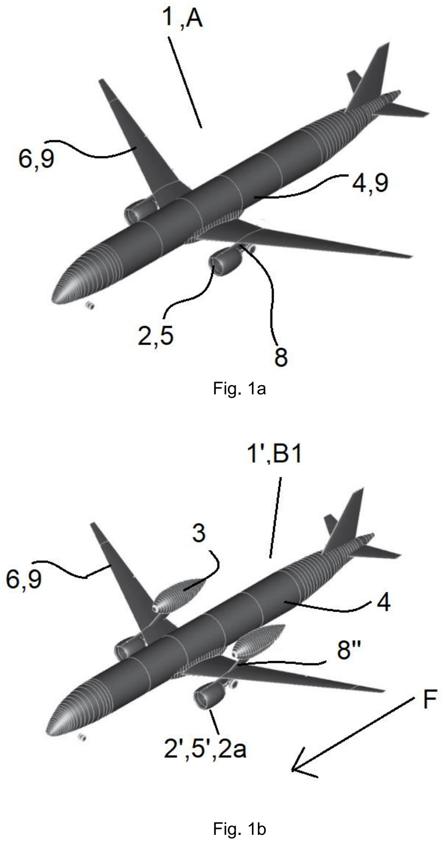

Fig 1a: ein kerosinbetriebenes, konventionelles Flugzeug in einer Ausgangskonfiguration,
Fig 1 b: das Flugzeug aus Fig.1a, welches mittels einer Ausführungsform des erfindungsgemäßen Verfahrens nachgerüstet wurde in einer erweiterten Konfiguration;
Fig. 1c: das Flugzeug aus Fig. 1b in einer Basiskonfiguration;
Fig. 2 ein weiteres, mittels einer anderen Ausführungsform des erfindungsgemäßen Verfahrens nachgerüstetes Flugzeug in einer erweiterten Konfiguration;
Fig. 3 ein weiteres mittels einer weiteren anderen Ausführungsform des erfindungsgemäßen Verfahrens nachgerüstetes Flugzeug in einer erweiterten Konfiguration;

In der Fig. 1a ist ein Flugzeug 1 in einer Ausgangskonfiguration A gezeigt, welches sich als Ausgangspunkt für die Durchführung des erfindungsgemäßen Nachrüstverfahrens eignet. Das Flugzeug 1 weist ein Triebwerk 2, insbesondere ein Turbofan-Triebwerk, mit einer Kerosin-Gasturbine 5 auf, die ausschließlich zur Nutzung von Kerosin als Treibstoff ausgelegt ist. Das Kerosin wird dabei in bekannter Weise in einem Haupttank 9 gespeichert, dieser kann sich in einem Flugzeugrumpf 4 und/oder den Flügeln 6 befinden. Prinzipiell ist auch ein derartiges Flugzeug 1 als Ausgangskonfiguration A verwendbar, dessen Haupttank 9 zur Speicherung des Kerosins zum Antrieb des Triebwerks 2 nur in den Flügeln 6 oder nur im Flugzeugrumpf 4 angeordnet ist. Das Triebwerk 2 ist jeweils in bekannter Weise über Pylonen 8 mit dem Flügel 6 verbunden.

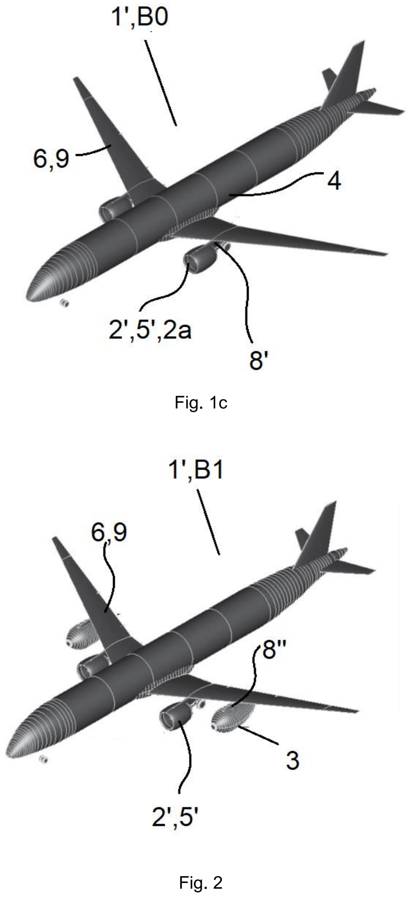

Fig. 1b zeigt das Flugzeug aus der Fig. 1a in Form eines nachgerüsteten Flugzeuges 1', was nach Durchführung eines erfindungsgemäßen Nachrüstverfahrens in einer erweiterten Konfiguration B1 bereitgestellt ist. Der Flugzeugrumpf 4 bleibt dabei gänzlich unverändert, wie auch der Haupttank 9, der weiterhin zur Aufnahme von Kerosin für eine Versorgung des erweiterten Triebwerks 2' mit Treibstoff vorgesehen ist. Das Triebwerk 2 aus der Ausgangskonfiguration A ist in der dargestellten Ausführung des nachgerüsteten Flugzeuges 1' zu einem alternativen Triebwerk 2' umgebaut, wobei das alternative Triebwerk 2' ein Dual-Fuel Triebwerk ist, welches sowohl über Zufuhr von Kerosin aus dem Haupttank 9, als auch über Zufuhr eines alternativen Treibstoffs, der in Außentanks 3 gespeichert ist, betreibbar ist. Dabei ist insbesondere eine im Triebwerk 2 vorhandene Kerosin-Gasturbine 5 um ein alternatives Antriebsmittel 2a ergänzt und das Triebwerk 2' derart zu einem alternativen Triebwerk 2' erweitert. Als alternatives Antriebsmittel 2a kann bevorzugt eineBrennstoffzelle vorgesehen sein. Grundsätzlich kann hier jedoch jegliches Antriebsmittel eingesetzt werden, welches einen auf einem alternativen Treibstoff basierenden Antrieb ermöglicht. Nach Durchführung des erfindungsgemäßen Verfahrens weist das nachgerüstete Flugzeug 1' zudem einen Außentank 3 an jedem der beiden Flugzeugflügel auf. Von der Erfindung eingeschlossen ist grundsätzlich auch das Vorsehen einer anderen Zahl an Außentanks 3. Eine Außenhaut der an den Flügeln 6 angeordneten Außentanks 3 weist eine widerstandsreduzierende Tropfenform auf, deren Längsachse, die durch eine Verbindungslinie zwischen vordersten und hintersten Punkt der Tropfenform gebildet ist, widerstandsminimierend ausgerichtet ist, d.h. parallel (mit bis zu 5° Abweichung) zu der Längsachse F des Rumpfes ausgerichtet, wobei deren Spitze jeweils zu einem Rumpfhinterteil, entgegen der Längsachse F des Rumpfes ausgerichtet ist . An dieser Spitze kann ein Antriebsmittel angeordnet sein, insbesondere in Form eines Propellers, welches den Hauptantrieb in Form der beiden Dual -Fuel Triebwerke 5' entlastet und so negative Einflüsse der Außentanks 3 auf die aerodynamische Charakteristik des nachgerüsteten Flugzeuges 1' ausgleicht. Innerhalb der Außentanks 3 ist zudem der eigentliche Treibstoffspeicher zur Speicherung des alternativen Treibstoffs vorgesehen. Je nach Form des alternativen Treibstoffs, muss der Treibstoffspeicher bestimmte Kriterien bezüglich Druckfestigkeit o.ä. aufweisen. Bei kryogener Speicherung alternativen Treibstoffs muss zudem auf eine ausreichende Isolierung des gesamten Außentanks 3 geachtet werden bzw. muss der Außentank 3 zusätzlich eine thermische Regulierung aufweisen, insbesondere bei der Speicherung von flüssigem Wasserstoff. Etwaig vorhandene Mittel zur Erzeugung laminarer Strömung an den Außentanks 3 sind nicht dargestellt, deren Vorhandensein ist zudem lediglich optional nach Durchführung des erfindungsgemäßen Nachrüstverfahrens. Je nach Ausführung der zugefügten Außentanks 3 sind damit Mittel zur Erzeugung laminarer Strömung an einer Oberfläche des Außentanks und/oder Antriebsmittel, welche in den Außentanks integriert sind, am nachgerüsteten Flugzeug 1' vorhanden oder nicht. Das dargestellte Dual-Fuel Triebwerk 5' ist in der Lage, das nachgerüstete Flugzeug 1' in einer Flugphase oder für einen gesamten Flug ausschließlich auf Basis von Kerosin oder ausschließlich auf Basis des alternativen Treibstoffs zu betreiben bzw. durch beide Treibstoffe gleichzeitig. Die alternativen Triebwerke 2' sind über Pylonen 8' mit den Flügen 6 in bekannter Weise verbunden. Die Flügel 6 können im Verglich zu den Flügeln 6 in der Ausgangskonfiguration A verstärkt ausgebildet sein. Grundsätzlich können im erfindungsgemäßen Verfahren dem Flugzeug zugefügte Außentanks 3 auch eine andere Form aufweisen, insbesondere eine langgestreckte und/oder ellipsoide Form, wobei eine Länge des Außentanks 3 bevorzugt mehr als das Doppelte eines Durchmessers des Außentanks 3 beträgt. In der dargestellten Ausführungsform sind die Außentanks 3 bzw. deren Pylonen 8" in einem Lot auf den Flügel 6 oberhalb der jeweiligen Pylonen 8' der veränderten Triebwerke 2' angeordnet. Insbesondere derart, dass sich deren Position entlang einer Spannweite des Flügels 6 in etwa entspricht. Derart können Treibstoffleitungen zur Versorgung des veränderten Triebwerks 2' mit alternativem Treibstoff möglichst kurz gehalten werden. Die Außentanks 3 sind gemäß der dargestellten Ausführungsform in einer ähnlichen Flügelbreitenposition wie die veränderten Triebwerke 2' oberhalb dieser und beabstandet oberhalb des Flügels 6 angeordnet. Die Außentankform weißt dabei ein Tropfenform auf, wobei eine Außentanklängsachse parallel zur Längsachse des Rumpfes F ausgerichtet ist, wobei ein kleiner Winkel zu der Längsachse des Rumpfes F (bis zu ca. 5° Abweichung) in einer weiteren Ausführungsform möglich ist. Entgegen der Flugrichtung ragt die Spitze der Außentanks 3 jeweils über eine Hinterkante des Flügels 6 hinaus. Hier sind auch andere Anordnungen der Außentanks 3 oberhalb des Flügels möglich, wobei jeweils ein Kompromiss zwischen struktureller Belastung des Flügels, die durch eine größere Entfernung zum Flügel erhöht wird, und aerodynamisch günstiger Anordnung notwendig ist. Das dargestellte nachgerüstete Flugzeug 1' kann einerseits durch ein Nachrüstverfahren angewendet auf ein Flugzeug gemäß Fig. 1 hergestellt werden, genauso ist es jedoch möglich, dass es sich bei dem dargestellten nachgerüsteten Flugzeug 1' um ein komplett neu gebautes Flugzeug handelt, wie von der Erfindung ebenfalls beansprucht.

In der Fig. 1c ist das in der Fig. 1b dargestellte nachgerüstete Flugzeug 1' in einer Basiskonfiguration B0 gezeigt. In dieser Basiskonfiguration B0 sind die Außentanks 3 bzw. die entsprechenden Anbindungen/Pylonen8" des nachgerüsteten Flugzeugs 1' in der erweiterten Konfiguration abgebaut. Damit ähnelt das nachgerüstete Flugzeug 1' in der Basiskonfiguration der Ausgangskonfiguration A des Flugzeuges 1, wobei es sich durch ein verändertes Triebwerk 2', welches ein Dual-Fuel Triebwerk 5' ist, sowie etwaig im Flügel 6 vorhandene Verstärkungen unterscheidet. In der Basiskonfiguration B0 wird das nachgerüstete Flugzeug 1' über die veränderten Triebwerke 2' lediglich auf Basis von Kerosin betrieben. Wenn Konfiguration B0 mit einem konventionellen Retrofit der Ausgangskonfiguration A mit den modernsten, rein kerosinbasierten Triebwerken 2 verglichen werden würde, würde Konfiguration B0 eine geringere Effizienz/ geringerer Reichweite aufweisen, da Dual-Fuel Triebwerke in der Regel weniger effizient als konventionelle, nur auf Kerosin ausgelegte Triebwerke sind. Dafür ist die Option, das nachgerüstete Flugzeug 1' in der erweiterten Konfiguration B1 zu betreiben dessen Einsetzbarkeit verbessernd und insbesondere ist es über Betrieb mit alternativem Treibstoff deutlich ökologischer einsetzbar. Zudem ist anzunehmen, dass das Flugzeug 1 in der Ausgangskonfiguration A im Allgemeinen bereits ein gewisses Alter aufweist, beispielsweise 10 Jahre, und damit zumeist keine moderne Triebwerkstechnologie aufweist. Damit ist es möglich, dass ein modernes, verändertes Triebwerk 2' im reinen Kerosinmodus effizienter ist als das kerosinbasierte Triebwerk 2 des Flugzeuges 1 in der Ausgangskonfiguration A.

Durch Anbau der Außentanks 3, bzw. der diese tragenden Pylonen 8" und Verbinden der entsprechenden Treibstoff- und Signalleitungen und Schnittstellen ist aus der Basiskonfiguration B0 wiederum die erweiterte Konfiguration B1 des nachgerüsteten Flugzeuges 1' erzeugbar. Dies gilt sowohl bei einem nachgerüsteten Flugzeug als auch bei einem entsprechenden erfindungsgemäßen Flugzeugneubau.

In der Fig. 2 ist ein weiteres, gemäß Durchführung des erfindungsgemäßen Verfahrens nachgerüstetes Flugzeug 1' dargestellt bzw. eine entsprechende Neukonstruktion. Das nachgerüstete Flugzeug 1' weist wiederum ein Dual-Fuel Triebwerk 5' auf. Dieses kann wiederum eine Kerosin-Gasturbine sowie ein alternatives Antriebsmittel 2a aufweisen oder eine Dual-Fuel Gasturbine zur Verwendung mit Kerosin und alternativem Treibstoff. Die zugefügten Außentanks 3 sind in der gezeigten Ausführungsform unterhalb der Flügel 6 angeordnet. Sie sind wiederum mittels Pylonen 8" mit den Flügeln 6 verbunden. Die Außentanks 3 sind in der gezeigten Ausführung in etwa mittig zwischen Flügelvorderkante und -hinterkante unterhalb des jeweiligen Flügels 6 angeordnet. Eine verschobene Anordnung ist grundsätzlich auch möglich. Die Außentanks 3 sind im Vergleich zu den veränderten Triebwerken 2' weiter entfernt vom Flugzeugrumpf 4 angeordnet. Eine Entfernung von alternativem Triebwerk 2' und Außentank 3 entlang der Länge des Flugzeugflügels 6 ist derart zu wählen, dass Treibstoffleitungen zwar möglichst kurz gehalten werden, beide Elemente sich gleichzeitig jedoch möglichst wenig negativ aerodynamisch beeinflussen. Eine Anordnung der Außentanks 3 unterhalb der Flügel 6 ist sowohl aerodynamisch als auch für die Struktur der tragenden Pylonen 8" effizienter, allerdings weist diese längere Kraftstoffleitungen vom Außentank 3 zu den veränderten Triebwerken 2' auf, die in den Flügel integriert werden müssen. Eine derartige Anordnung würde ebenso die Flügelstruktur stärker beanspruchen, da eine Außentankmasse an einer deutlich dünneren Stelle des Flügels angebracht wird, was z.B. die aeroelastischen Eigenschaften des Flügels 6 verschlechtern kann.

Da die Außentanks 3 bezüglich ihrer longitudinalen Position entlang des Flugzeugrumpfes 4 sowohl in der Variante gemäß Fig. 1b als auch in der Variante gemäß Fig. 2 nahe an einem Flugzeugschwerpunkt angeordnet sind, sind die entsprechende beschriebenen Anordnungen der Außentanks 3 besonders bevorzugt für das erfindungsgemäße Nachrüstverfahren bzw. das entsprechend konstruierte neue oder nachgerüstete Flugzeug 1', da deren wahlweises Vorhandensein keine Schwerpunktsverschiebung bedeutet.

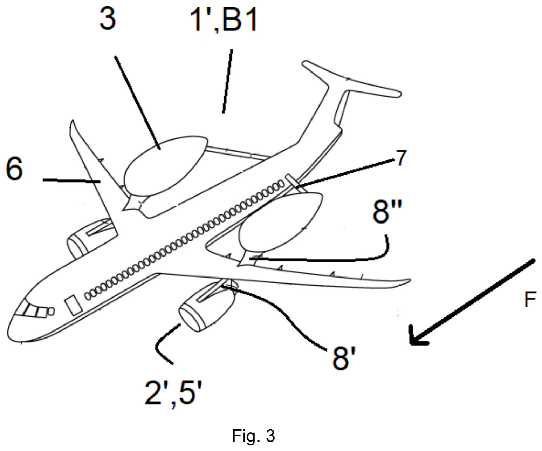

Fig. 3 zeigt eine weitere Variante eines gemäß einem erfindungsgemäßen Verfahren nachgerüsteten Flugzeuges 1' in einer erweiterten Konfiguration B1. Das nachgerüstete Flugzeug 1' weist von einem Flugzeugrumpf 4 zu den Außentanks 3 weisende Stützstreben 7 auf, die den Außentank 3 jeweils zusätzlich stabilisieren. Diese Stützstreben 7 verursachen zwar einen weiteren Widerstand, können allerdings die Struktur so stabilisieren, dass vorteilhaft trotz der Umrüstung keine Verstärkungen an der Struktur der Flügel notwendig sind. Prinzipiell sind auch andere Anordnungen der Stützstreben 7 bzw. eine andere Anzahl möglich.

### BEZUGSZEICHENLISTE

- 1: Flugzeug
- 1': nachgerüstetes Flugzeug
- 2: kerosinbasiertes Triebwerk
- 2': verändertes Triebwerk
- 2a: alternatives Antriebsmittel
- 3: Außentank
- 4: Flugzeugrumpf
- 5: Kerosin-Gasturbine
- 5': Dual-Fuel Triebwerk
- 6: Flügel
- 7: Stützstreben
- 8: Pylon
- 9: Haupttank
- A: Ausgangskonfiguration
- B0: Basiskonfiguration
- B1: erweiterte Konfiguration
- F: Längsachse des Rumpfes

## Patentansprüche

1. Verfahren zur Nachrüstung eines Flugzeuges (1) mit kerosinbasiertem Triebwerk (2) aufweisend folgende Schritte:
- Bereitstellen des Flugzeuges (1) in einer Ausgangkonfiguration (A) mit kerosinbasiertem Triebwerk (2);
- Austauschen oder Erweitern des kerosinbasierten Triebwerks (2) des Flugzeuges (1), sodass es einen verändertes Triebwerk (2') aufweist, das sowohl mit Kerosin als auch mit einem alternativen Treibstoff angetrieben werden kann;
- Hinzufügen von, insbesondere modular entfernbaren, Außentanks (3) außerhalb eines Flugzeugrumpfes (4) und beanstandet zu diesem, wobei der alternative Treibstoff insbesondere ausschließlich in den Außentanks (3) gespeichert wird.

2. Verfahren nach Anspruch 1, wobei die Nachrüstung und anschließende Bereitstellung des nachgerüsteten Flugzeuges derart erfolgt, dass die maximale Startmasse des Flugzeuges in der Ausgangskonfiguration der maximalen Startmasse des nachgerüsteten Flugzeuges entspricht.

3. Verfahren nach Anspruch 2, wobei das kerosinbasierte Triebwerk (2) eine Kerosin-Gasturbine (5) ist und/oder wobei das veränderte Triebwerk (2') als Dual-Fuel Triebwerk (5') ausgebildet ist.

4. Verfahren nach Anspruch 1, 2 oder 3, wobei das veränderte Triebwerk (2') eine Kerosin-Gasturbine (5) und ein alternatives Antriebsmittel (2a), insbesondere eine Brennstoffzelle aufweist oder durch diese beiden gebildet ist.

5. Verfahren nach Anspruch 1, 2 oder 3, wobei das veränderte Triebwerk (2') eine Dual-Fuel Gasturbine aufweist oder durch diese gebildet ist.

6. Verfahren nach einem der vorherigen Ansprüche, wobei der alternative Treibstoff Wasserstoff, insbesondere Flüssigwasserstoff, oder LNG ist.

7. Verfahren nach einem der vorherigen Ansprüche, wobei die Außentanks (3) mittels Pylonen (8) befestigt werden.

8. Verfahren nach Anspruch 7, wobei die Außentanks (3) an Flügeln (6) des Flugzeuges (1) angeordnet werden, insbesondere oberhalb oder unterhalb der Flügel (6), insbesondere wobei eine Struktur der Flügel (6) modifiziert wird, um ein Gewicht der Außentanks (3) und deren aerodynamische, strukturmechanische und aeroelastische Lasten tragen zu können und eine mechanische Anbindung mit den Flügeln (6) zu ermöglichen.

9. Verfahren nach Anspruch 7 oder 8, wobei die Außenstanks (3) mit Stützstreben (7) am Flugzeugrumpf (4) abgestützt werden.

10. Verfahren nach einem der vorherigen Ansprüche, wobei die Außentanks (3) Mittel zur Erzeugung von laminarer Strömung und/oder schuberzeugende Antriebsmittel aufweisen.

11. Verfahren nach Anspruch 8, wobei die Mittel zur Erzeugung laminarer Strömung eine mikroperforierte Oberfläche aufweisen, weiter insbesondere als HLFC System ausgebildet sind, wobei das HLFC System insbesondere ein autonomes Leistungserzugugungssystem umfasst, wodurch es insbesondere unter Nutzung des im Außentank (3) gespeicherten alternativen Treibstoffs angetrieben werden kann und/oder wobei die Antriebsmittel einen Propeller aufweisen und/oder dass die Antriebsmittel unter Nutzung der Leistung des Lesitungserzeugungssystems angetrieben werden können.

12. Verfahren nach Anspruch 10 oder 11, wobei die Antriebsmittel zur Aufnahme von Luft aus einer den Außentank (3) umgebenen Grenzschicht ausgelegt sind und/oder wobei die Antriebsmittel Absaugmittel zum Absaugen der Luft aus der Grenzschicht enthalten.

13. Betriebsverfahren für ein gemäß einem der Ansprüche 1 bis 12 nachgerüstetes Flugzeug (1'), wobei das nachgerüstete Flugzeug (1') entweder in einer Basiskonfiguration (B0), bei der die Außentanks (3) abgebaut sind, mit Kerosin betrieben wird oder in einer erweiterten Konfiguration (B1), mit angebauten Außentanks (3), mit Kerosin, alternativem Treibstoff oder einer Kombination aus beidem betrieben wird.

14. Betriebsverfahren nach Anspruch 13, wobei das nachgerüstete Flugzeug (1') in der erweiterten Konfiguration (B1) zumindest in einigen Flugphasen ausschließlich mit Kerosin, ausschließlich mit alternativem Treibstoff oder gleichzeitig mit Kerosin und alternativem Treibstoff angetrieben wird.

15. Flugzeug aufweisend die Komponenten des gemäß dem Verfahren nach Ansprüchen 1 - 12 nachgerüsteten Flugzeuges.
